# EUROPEAN PATENT APPLICATION

(11) **EP 2 124 143 A2**
(43) Date of publication of application: **25.11.2009**
(21) Application number: 09160905.7
(22) Date of filing: 22.05.2009
(51) Int. Cl.: G06F 3/12

(54) **Information processing apparatus, preview method, and storage medium**

(30) Priority: 23.05.2008 JP 2008135685
(71) Applicant: Canon Kabushiki Kaisha, Tokyo 146-8501 (JP)
(72) Inventor: Shiohara, Tetsuya, Ohta-ku Tokyo (JP)
(74) Representative: Garner, Jonathan Charles Stapleton

(57) **Abstract**

A preview filter using an XPS interface converts print data from a XML format to a stream format only when a preview setting is on, and creates a preview document. The preview filter displays the preview document and realizes a print preview, so that a performance lowering caused by adding the preview filter is reduced.

## Description

### BACKGROUND OF THE INVENTION

### Field of the Invention

The present invention relates to an information processing apparatus including a preview function that displays a print image which can be viewed by a user before performing a printing process, a preview method, and a storage medium.

### Description of the Related Art

A printing system that uses a computer in which Microsoft Windows® operating system (OS) is installed, performs a printing process as described below. Print data generated by an application program is stored in a spool file in a data format according to the OS standard. The OS calls up a printer driver to print the print data, and the printer driver reads out the print data stored in the spool file. An image generation unit then generates the print image and coverts the image into a print command that can be interpreted by a printer. The print command is transmitted to the printer which interprets the print command and thus forms an image on a recording medium.

In such a printing system, the printer driver provides a preview function by executing a previewer that displays the print image when the printing process is started. The image generation unit then generates a preview print image, and the previewer displays the preview print image. More specifically, in the printer driver, the preview function is realized by collaboration between the image generation unit which generates the print image and the previewer which displays the print image (refer to Japanese Patent Application Laid-Open No. 2004-102618).

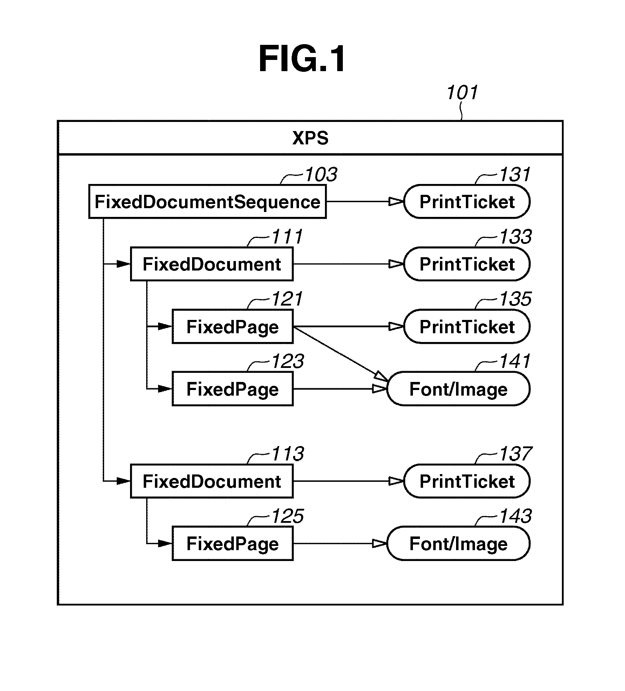

However, in recent years, there is a printing system which is different from the above-described conventional printing system. The new printing system uses Extended Markup Language (XML) Paper Specification (XPS) format as the data format for storing the print data in the spool file, instead of the conventional Enhance Meta File (EMF) format. The XPS format will be described below with reference to Fig. 1. XPS is an electronic document format, and since Microsoft Corporation has developed XPS as an open format, the OS provides display means. By using such display means, conversion of the XPS print data to an image becomes unnecessary when displaying the print data, unlike a conventional print preview in which the print data is converted to an image to be displayed.

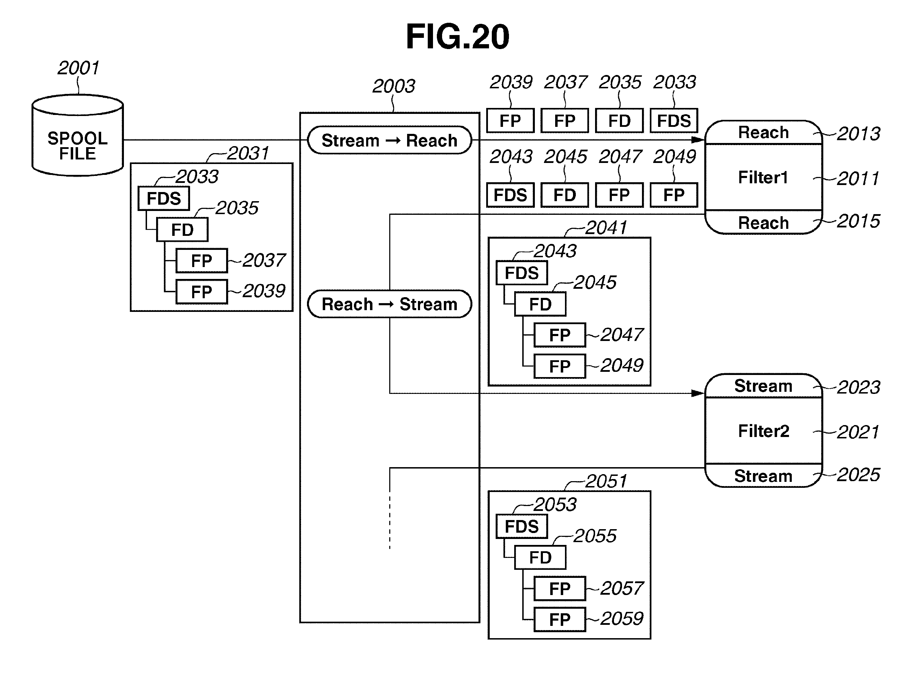

Further, in the new printing system, an XPS printer driver includes modules referred to as filters. Referring to Fig. 20, the filters transmit and receive data between each other using either one of the two types of input and output interfaces. The two types include an xps document interface which handles the XPS data by each XPS part, and an xps stream interface which handles the XPS data as a byte stream, both of which will be described in detail below. In the stream format data, the XPS parts are collectively zip-compressed.

If the output interface of a filter is different from the input interface of the subsequent filter, an OS print support function coverts the data passed between the filters. Therefore, it is not necessary for a developer of the filters to be aware of the differences in the interfaces. However, since conversion takes time, it may be desirable to configure the filters using interfaces of the same format to improve the performance of the printer driver. Further, the filter configuration of the printer driver is managed in an XML file which describes the configuration, so that generally, the filter configuration cannot be changed according to the print data or the print setting for each printing.

Further, if a filter which controls the preview function is to be used in the printing system, XPS data is required to display the preview. Therefore, it is desirable to use the xps stream interface instead of the XPS document interface which handles the XPS data by each part. However, since the filter using the XPS document interface is suitable for a layout process in which each XPS part is edited, the development cost can be reduced by using the XPS document interface for the layout filter. On the other hand, if the XPS document interface is used in the previous and next filters of the preview filter, a conversion process is to be performed when the preview filter uses the XPS stream interface, so that the performance of the printer driver is lowered.

### SUMMARY OF THE INVENTION

The present invention is directed a method which can reduce the load and suppress performance degradation caused by data conversion between filters.

According to a first aspect of the present invention there is provided an information processing apparatus as specified in claim 1.

According to a second aspect of the present invention there is provided an information processing apparatus as specified in claim 4.

According to a third aspect of the present invention there is provided an information processing method as specified in claim 6. According to a fourth aspect of the present invention there is provided an information processing method according to claim 7.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 is a schematic diagram illustrating a logical structure of XPS.

Fig. 2 is a block diagram illustrating an example of a printing system according to an exemplary embodiment of the present invention.

Fig. 3 is a block diagram illustrating an example of a printer driver according to the exemplary embodiment of the present invention.

Fig. 4 illustrates an example of a print setting dialog according to the exemplary embodiment of the present invention.

Fig. 5 illustrates an example of a preview window according to the exemplary embodiment of the present invention.

Figs. 6A and 6B illustrate a relation between filters and input and output interfaces according to the exemplary embodiment of the present invention.

Fig. 7 is a schematic diagram illustrating a preview process according to the exemplary embodiment of the present invention.

Fig. 8 is a flowchart illustrating a preview filter process according to the exemplary embodiment of the present invention.

Fig. 9 is a flowchart illustrating a reference PrintTicket acquisition process according to the exemplary embodiment of the present invention.

Fig. 10 is a flowchart illustrating an XPS parts acquisition process according to the exemplary embodiment of the present invention.

Fig. 11 is a flowchart illustrating a previewer process according to the exemplary embodiment of the present invention.

Fig. 12 is a flowchart illustrating a preview XPS document generation process according to the exemplary embodiment of the present invention.

Fig. 13 is a flowchart illustrating a process for registering a resource in a FixedPage according to the exemplary embodiment of the present invention.

Fig. 14 illustrates a relation between print data and a preview XPS document according to the exemplary embodiment of the present invention.

Fig. 15 is a flowchart illustrating a printing process according to a second exemplary embodiment of the present invention.

Fig. 16 is a flowchart illustrating a preview filter process according to a third exemplary embodiment of the present invention.

Fig. 17 is a flowchart illustrating an XPS parts acquisition process according to the third exemplary embodiment of the present invention.

Fig. 18 is a flowchart illustrating a previewer process according to the third exemplary embodiment of the present invention.

Fig. 19 is a flowchart illustrating an XPS parts transmission process according to the third exemplary embodiment of the present invention.

Fig. 20 illustrates an example of a filter interface operation.

Fig. 21 is a flowchart illustrating a process of a preview filter that includes a previewer function.

### DETAILED DESCRIPTION OF THE EMBODIMENTS

Various exemplary embodiments, features, and aspects of the invention will be described in detail below with reference to the drawings.

In the description below, XPS is an open electronic document format developed by Microsoft Corporation.

An XPS document has a tree structure with FixedDocumentSequence (FDS) as its root. The FDS includes a plurality of FixedDocuments (FD) including a plurality of FixedPages (FP). The FDS, FD, and FP are also referred to as XPS parts. The FP describes a content of a page of a document using the XML format, and includes the content to be actually displayed or printed. Resources such as fonts and images used in the page content of the FP can be shared by a plurality of FP. Further, the FDS, FD, and FP can each include print settings in the form of a PrintTicket (PT). The PT describes print settings for printing the XPS document using the XML format. More specifically, the print settings used to print each FP is a PT in which the PT in the FDS, PT in a parent FD of the FP to be printed, and a PT of the FP to be printed are merged.

Fig. 1 is an example of a block diagram illustrating a logical structure of the XPS document.

Referring to Fig. 1, a logical structure of an XPS document 101 is a tree structure with FDS 103 as its root. The FDS 103 includes FD 111 and FD 113 as children. The FD 111 includes FP 121 and FP 123 as children. The FD 113 includes FP 125 as a child. Further, with regard to the PTs in which the print settings are written, the FDS 103 includes PT 131, the FD 111 includes PT 133, the FP 121 includes PT 135, and the FD 113 includes PT 137. The FP 123 and the FP 125 do not include any PT. Further, the FP 121 and the FP 123 share a resource 141 such as fonts and images, and the FP 125 uses a resource 143 including fonts and images. PT to be used in printing the FP 121 is acquired by merging the PT 131, PT 133, and the PT 135. Further, the actual XPS document is data acquired by compressing the structured document illustrated in Fig. 1.

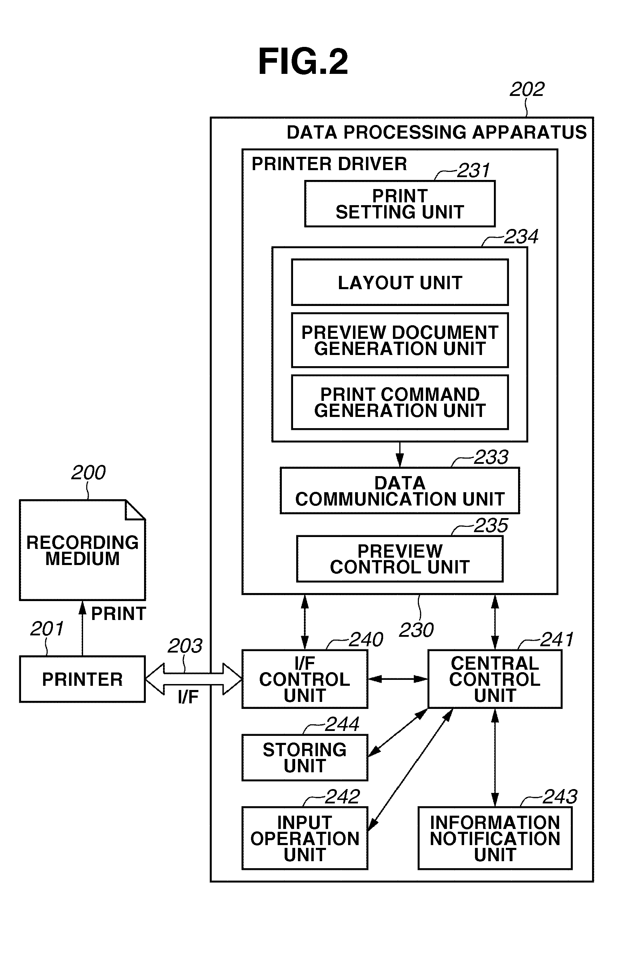

Fig. 2 is a block diagram illustrating a configuration of a printing system according to the exemplary embodiment of the present invention.

Referring to Fig. 2, a printer 201 is an inkjet printer which forms an image on a recording medium 200 according to a print command generated in a data processing apparatus 202 to be described below. The type of printer is not limited to the above-described inkjet printer while a color ink jet printer is described in the present exemplary embodiment.

In the data processing apparatus 202, an application generates a print job, and a printer driver generates a print command from spool data of the print job to control a printing operation performed by the printer 201 connected to the data processing apparatus 202. In the present exemplary embodiment, the data processing apparatus 202 which uses a personal computer, also receives an instruction or input by a user regarding print settings. The data processing apparatus 202 includes various function blocks 230, 231, 232, 233, 234, 235, 240, 241, 242, and 243. An OS which controls the data processing apparatus 202 is installed in the data processing apparatus 202, and each function block operates on the OS.

A communication interface (I/F) 203 connects the data processing apparatus 202 and the printer 201. In the present exemplary embodiment, the communication I/F 203 is a universal serial bus (USB), i.e., a serial interface. However, the communication I/F 203 can also use a serial interface such as Institute of Electrical and Electronics Engineers (IEEE) 1394, Ethernet®, Infrared Data Association (IrDA), IEEE802.11, and a power line, or a parallel interface such as Centronics and small computer system interface (SCSI). Any interface which realizes communication can be used, regardless of whether the interface is wired or wireless.

As described above, the printing system according to the present exemplary embodiment is not a single apparatus and includes the data processing apparatus 202 connected by a specific bi-directional interface to the printer 201 which forms images. However, the printing system is not limited to the above-described configuration, and can be a printing system in which the functions of the data processing apparatus and the printer are integrated. Functions in the data processing apparatus 202 and the printer 201 which is considered irrelevant in describing the features of the present exemplary embodiment will be omitted.

Further, each of the function blocks can be realized by software. Such software (program code) can be supplied by a storage medium such as floppy disk, hard disk, optical disk, magneto-optical disk, compact disc (CD)- read-only memory (ROM), CD-rewritable (CD-R), magnetic tape, non-volatile memory card, and ROM.

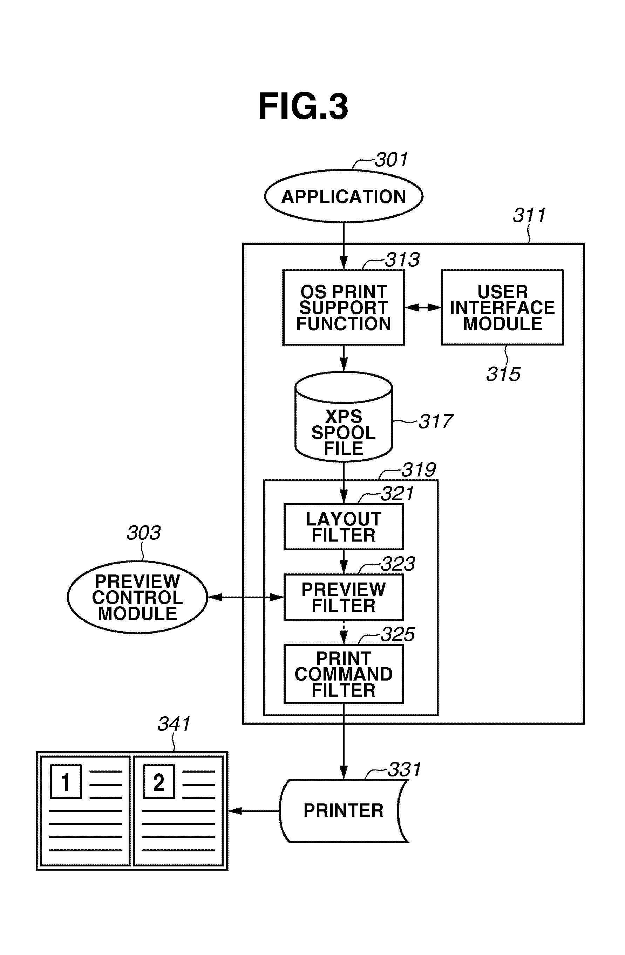

Fig. 3 is a schematic block diagram illustrating the printing system illustrated in Fig. 2, which focuses on the OS print support function and the printer driver, to describe an exemplary embodiment of the printer driver according to the present invention.

Referring to Fig. 3, modules relating to the present invention are a user interface module 315 including a print setting function, and a filter group 319. The filter group 319 includes a layout filter 321 including a function for laying out a page of the XPS data, a preview filter 321 which provides a preview function, and a print command filter 325 including a function for converting the XPS data to a print command that can be interpreted by the printer. More specifically, a filter is a program having a function to process, convert, or not convert generally input data, to generate and output data.

In the printing system illustrated in Fig. 3, print data of each page of a document generated by an application 301 is temporarily stored in an XPS spool file 317 via an OS print support function 313. The filter group 319 in the printer driver converts the stored print data to a print command that can be interpreted by the printer 331 according to print setting information and supplies the print command to a printer 331 to be printed.

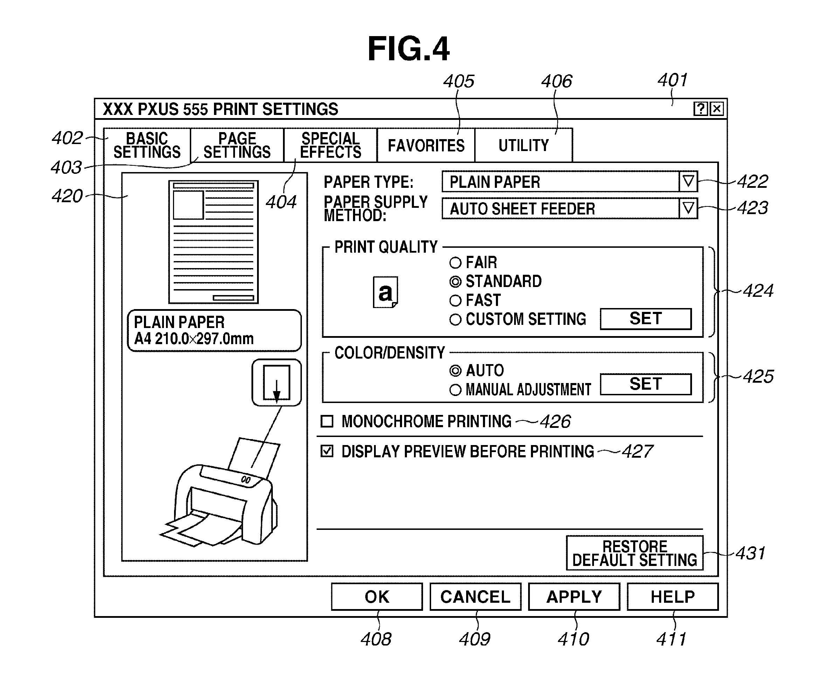

The user interface module 315 provides a function for setting paper size, print orientation, and other attributes that are generally used in printing. At the same time, the user interface module 315 in the present invention includes a preview setting function which displays a print image before starting a print operation in the printer. The user interface module 315 returns to the application 301 the print setting information in which setting values of a plurality of print setting items are stored. An example of a print setting dialog provided by the user interface module 315 will be described below with reference to Fig. 4.

When printing an arbitrary document generated by the application 301, the application 301 notifies the OS print support function 313 of print start and print end, print setting information returned from the user interface module 315 for specifying the print settings, and start and end of drawing each page in the document. The OS print support function 313 stores the content drawn by the application 301 and the print setting information in the XPS spool file 317. Each of the filters in the filter group 319 is called up by the OS print support function 313 when the spooled print job is to be despooled.

The filter group 319 in the printer driver includes one or more filters. The filter group 319 includes a function for reading out a print job from the XPS spool file, converting the print job into a print command that can be interpreted by the printer, supplying the print command to the printer 331, and performing printing. The filter group 319 in the present invention includes the layout filter 321 which is a layout processing unit, the preview filter 323 which is a preview document generation unit, and a print command filter 325 which is a print command conversion unit.

The XPS data stored in the XPS spool file 317 is input to the layout filter 321, which then performs a layout process according to the print setting information to output laid out XPS data. The layout process in the present exemplary embodiment includes N-up printing in which a plurality of pages is printed on one printing sheet, and poster printing in which one page is printed on a plurality of printing sheets.

The output of the layout filter 321 is input to the preview filter 323 which provides the preview function to the user according to the print settings.

The output of the preview filter 323 is then input to the print command filter 325, which converts the XPS data to a print command that can be interpreted by the printer according to the print setting information and outputs the print command.

The print command filter 325 which once converts the input XPS data to image data is generally referred to as a render filter. The render filter is often used in a printer driver of a low-cost raster printer such as the inkjet printer. When the print command filter 325 operates as the render filter, the print command filter 325 once converts the input XPS data to image data. Image processing such as color space conversion and binarization is then performed on the image data, so that the image data is converted into a print command that can be interpreted by the raster printer.

On the contrary, when XPS is included among types of print commands that can be interpreted by a highly-functional printer such as a page printer, the print command filter 325 edits the input XPS data and output XPS data. If it is not necessary for the print command filter 325 to process the XPS data, the input XPS data is directly output, or the print command filter 325 can be excluded from the printer driver.

The printer 331, i.e., the output device, interprets the print command generated by the print command filter 325 and forms a visible image on a printing paper. A print result output on a printing paper 341 illustrates an example in which the layout filter 321 performs a 2-up process.

Fig. 4 illustrates an example of a print setting dialog displayed when the user specifies a printing mode or various paper settings in the present exemplary embodiment.

Referring to Fig. 4, a print setting dialog 401 includes display areas 402, 403, 404, 405, 406, 407, 408, 409, 410, 411, 420, 421, 422, 423, 424, 425, 426, 427, 428, 429, 430, and 431. Since there are a number of items to be displayed in the print setting dialog, tab sheets are generally used to divide the setting items by contents, so that it can be easily viewed by the user.

Fig. 4 illustrates a display example when the user selects a basic settings tab 402.

A simple display area 420 in the basic settings tab sheet displays the setting information in a form that appeals to the eye, in addition to character information. A paper type selection portion 422 displays paper types and allows the user to select the paper type. The paper type selection portion 422 uses a drop-down menu which normally displays the selected paper type, and when the user clicks on the drop-down menu, paper types that can be selected are displayed as a list. The paper types that can be selected are types of paper that the printer can print an image on, including normal paper, glossy paper, coated paper, paper for printing photos, post card, and new year's card. A paper supply method selection portion 423 displays methods of supplying paper by the printer. The user can select a paper supply method such as using an auto-paper feed port, i.e., a paper feed tray or a paper feed cassette, or manual paper feed in which the user manually feeds each printing paper.

A print quality selection portion 424 displays items for the user to set the print quality. A color adjustment portion 425 displays items for the user to adjust colors in printing. A monochrome print setting portion 426 is a check box used to make a print in grayscale even if the print document is in color. A preview print setting portion 427 is a check box used by the user to confirm how the various print settings will be reflected in the print document before the printer actually prints the document. When the user presses a default setting button 431, the settings specified by selecting the basic settings tab 402 are restored to the default setting (i.e., settings at shipment).

When the user presses an OK button 408 after selecting each of the items, the print setting dialog 401 is closed and the selected print settings are reflected in printing. If the user presses a cancel button 409, the print setting dialog 401 is closed, and the selected setting items are cancelled, so that the selected print settings are not reflected in printing. When an apply button 410 is pressed, the selected print settings can be reflected in printing while the print setting dialog 401 is kept open. If the user presses a help button 411, explanations on each setting items that can be specified by pressing the basic settings tab 402 can be displayed in a separate window.

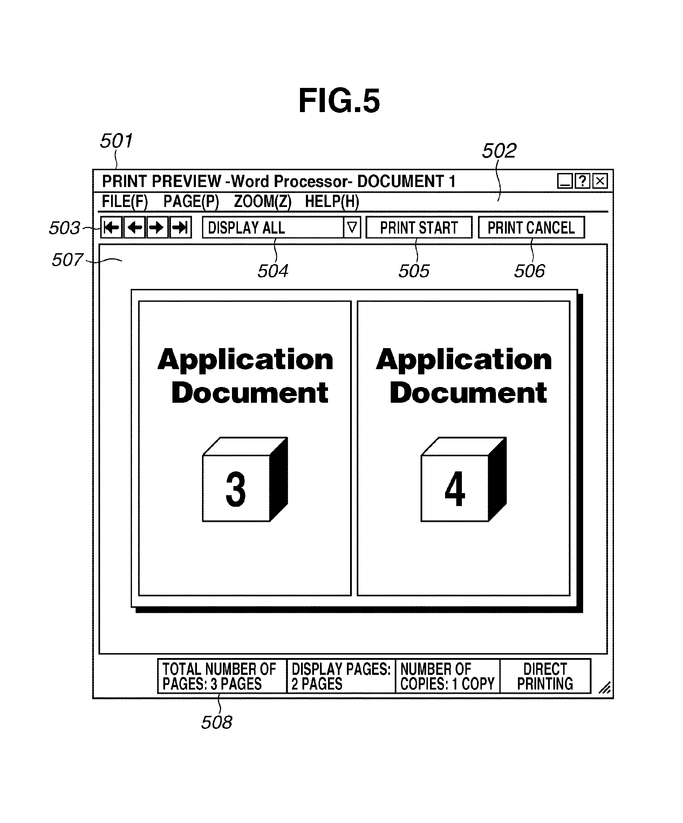

Fig. 5 illustrates an example of a display screen (i.e., a preview window) provided by a preview control module according to the present exemplary embodiment. A print preview window 501 combines a display area for displaying a preview image and print settings of a print job, with input means for the user to change a method of displaying the preview image.

The user can use a menu bar 502 to select an instruction to be given to a previewer, such as switching between screens, in a menu format. Instead of using the menu bar 502, the user can also use a tool bar including user operation portions (i.e., 503, 504, 505, and 506) to easily change a preview page. The user can use page switching buttons 503 that include four buttons to switch the preview display to the top page, previous page, next page, or the final page. A drop-down list 504 is used to change a display size of the preview image, and the user can select "display all", "100% display", or "200% display". If the user presses a print start button 505, the previewer ends, and the preview XPS document which the user has previewed can be printed. If the user presses a print cancel button 506, the previewer ends, and the print job can be cancelled.

A preview display area 507 uses the content of the preview XPS file to display the printing paper and a visible image to be formed on the printing paper as the print image. A display area 508 displays setting values of typical items in the print settings of the print job executing the preview function. In the present example, the total number of pages of the document is three pages, the number of the page currently being displayed as a preview is page two, a number of copies set in the print settings is one copy, and direct printing is set.

In the present exemplary embodiment, the display screen illustrated in Fig. 5 is displayed when a print job including print setting information in which a preview setting is "on" is spooled. Further, the display screen illustrated in Fig. 5 is displayed when a filter pipeline is activated by the OS print support function, and the preview filter activates the preview control module.

As described above, the XPS driver includes filters each having predetermined functions. The interface between the filters for receiving and sending data is either a XPS stream interface or a XPS document interface.

The stream interface directly handles byte stream print data. Further, the stream format interface can handle byte stream data other than XPS data. On the contrary, the document interface handles an XPS document (i.e., the print data) in units of XPS parts. More specifically, the XPS parts refer to FDS, FD, and FP, and PT, and resource such as images and fonts associated with FDS, FD, and FP. The types of input and output interfaces of each filter can be determined respectively. When the document interface is used, it is not necessary to analyze the XPS document and extract the XPS parts. Therefore, it is easier to perform processes such as the layout process in which the FP needs to be changed using the document interface, as compared to using the stream interface.

Operations performed by each interface will be described below with reference to Fig. 20. A filter1 2011 uses the document interface in input and output interfaces, and a filter2 2021 uses the stream interface in input and output interfaces. An XPS document 2031 stored as a spool file includes XPS parts 2033, 2035, 2037, and 2039.

The XPS document 2031 is transmitted to the filter1 2011. Since an input interface 2013 of the filter1 2011 uses the document interface, the XPS document 2031 is separated into XPS parts by an OS print support function 2003 and transmitted to the filter1 2011. The filter1 2011 edits the received XPS parts 2033, 2035, 2037, and 2039 as necessary and outputs the result. An output interface 2015 of the filter1 2011 is also uses the document interface, so that XPS parts 2043, 2045, 2047, and 2049 which are results of editing the XPS parts 2033, 2035, 2037, and 2039 are acquired as output data.

The data output from the filter1 2011 is then transmitted to the filter2 2021. Since an input interface 2023 of the filter2 2021 uses the stream interface, the OS print support function 2003 converts the data to an XPS document 2041 using the XPS parts 2043, 2045, 2047, and 2049, which is transmitted to the Filter 2 2021. The filter2 2021 receives the XPS document 2041 as a byte stream, edits the XPS document 2041 as necessary, and outputs the result. An output interface 2025 of the filter2 2021 also uses the stream interface, so that in general, the output data is an XPS document 2051 which is a result of editing the XPS document 2041. Further, since the stream interface can handle data other than the XPS document, the XPS document can be converted to data acquired by processing the XPS document 2041, such as a print command that can be interpreted by a printer, and transmitted to the filter2 2021.

When an XPS document is to be used as the preview document, the data is required to be of the XPS format, so that it is desirable to use the stream interface in the preview filter. However, since an XPS document is data acquired by compressing a structured document such as illustrated in Fig. 1, the XPS document needs to be analyzed to acquire the XPS parts. In contrast, the document interface receives data separated into XPS parts, so that the layout process, in which the XPS parts are edited, can be easily performed by using the document interface. Further, if the output interface also uses the document interface, the edited XPS parts can be directly transmitted to the next filter.

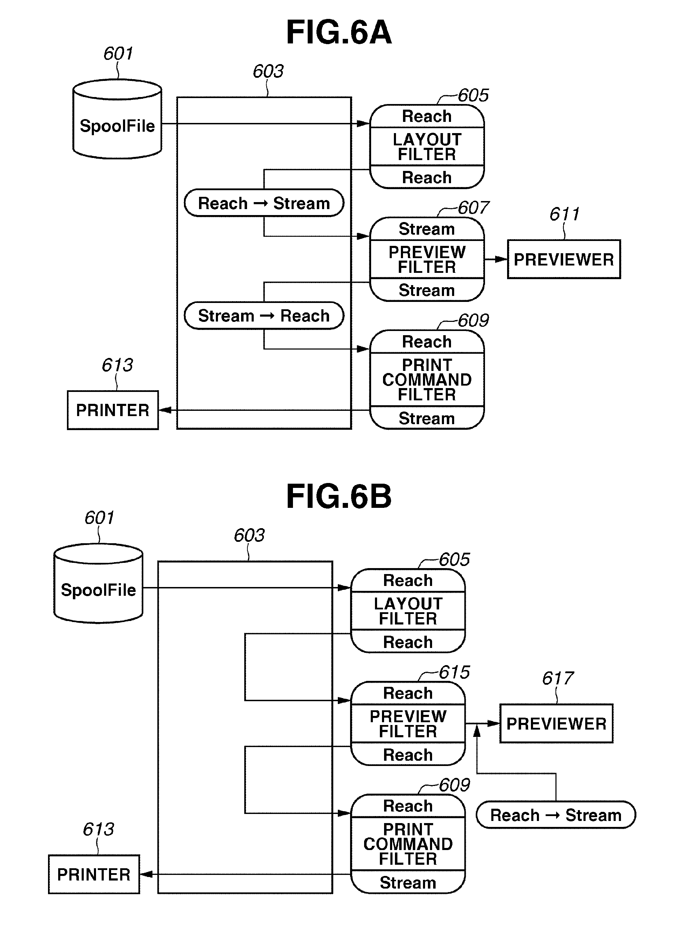

Therefore, as illustrated in Fig. 6A, the document interface can be used in the layout filter as described above. However, when data is transmitted from such layout filter to the preview filter, the data is converted from the XPS parts to a stream , which leads to performance degradation of the printer driver. If the subsequent print command filter also uses the document interface, the data is converted from the stream to theXPS parts, so that the performance of the printer driver is further degraded.

Moreover, basically, the types and alignment of the filters used in the printer driver cannot be changed, and data passes through the preview filter even if the preview is not to be displayed. Therefore, in such a case, unnecessary conversion is performed. To solve the above-described problems, a print control system according to the present exemplary embodiment uses a document format preview filter to convert the data from the XPS parts to the stream only when a preview is to be displayed, as illustrated in Fig. 6B.

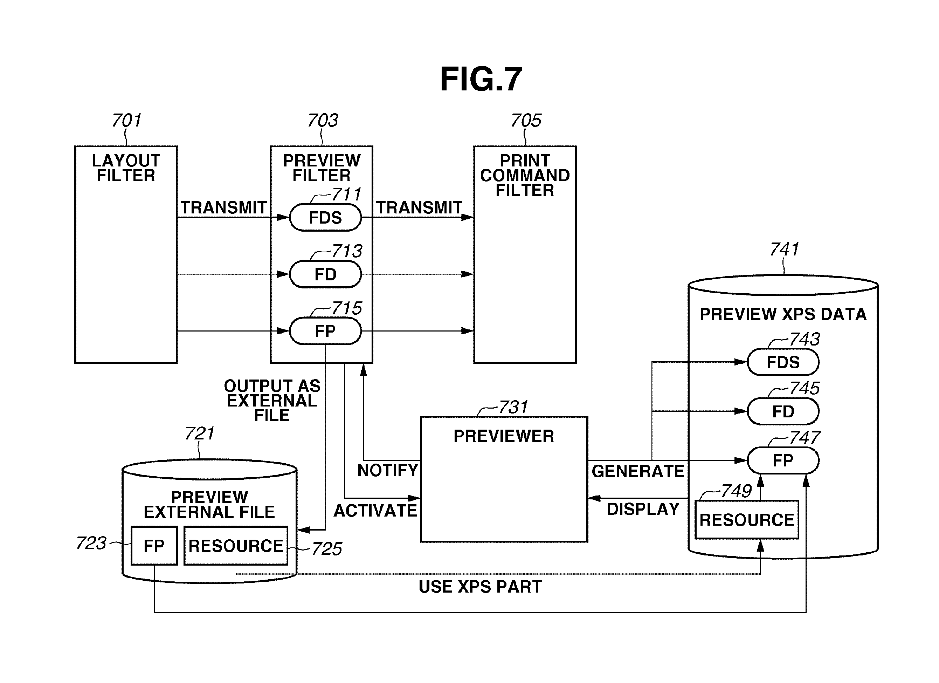

The preview function according to the above-described example will be described below with reference to Fig. 7.

A preview filter 703 receives the print data from a layout filter 701. Since the input interface of the preview filter 703 uses the document interface, the print data is transmitted by each XPS part. The preview filter 703 first receives and stores FDS 711 and FD 713. The FDS 711 and the FD 713 are then transmitted to the next filter when printing is to be continued after displaying the preview. However, the preview filter 703 can also transmit the FDS 711 directly after receiving the FDS 711.

The preview filter 703 receives FP 715 and stores the FP 715 and a resource including images and fonts associated with the FP 715 as an external file. The XPS parts are thus used to generate the preview XPS document.

After receiving all the FP, the preview filter 703 activates a previewer 731. The activated previewer 731 generates the preview XPS document by generating a base of an XPS document 741 and then generating FDS 743 and FD 745 in the XPS document 741. The previewer 731 then adds FP 723 stored as an external file and resource 745 associated with the FP 723 to the generated FD 745, and the preview XPS document 741 is generated. The preview is displayed by the previewer 731 displaying the generated preview XPS document 741. In the present exemplary embodiment, the previewer 731 generates and displays the preview XPS document. However, different applications can be used to generate and display the preview XPS document.

The user then confirms a preview screen displayed by the previewer 731 and instructs print start or print cancel. Upon receiving a user operation, the previewer 731 notifies the preview filter 703 of the user operation. The preview filter 703 receiving the print start notification transmits the stored XPS parts to the subsequent print command filter 705 in an appropriate order. On the other hand, if the preview filter 703 receives a print cancel notification, the preview filter 703 notifies each filter of the process end and ends the printing process.

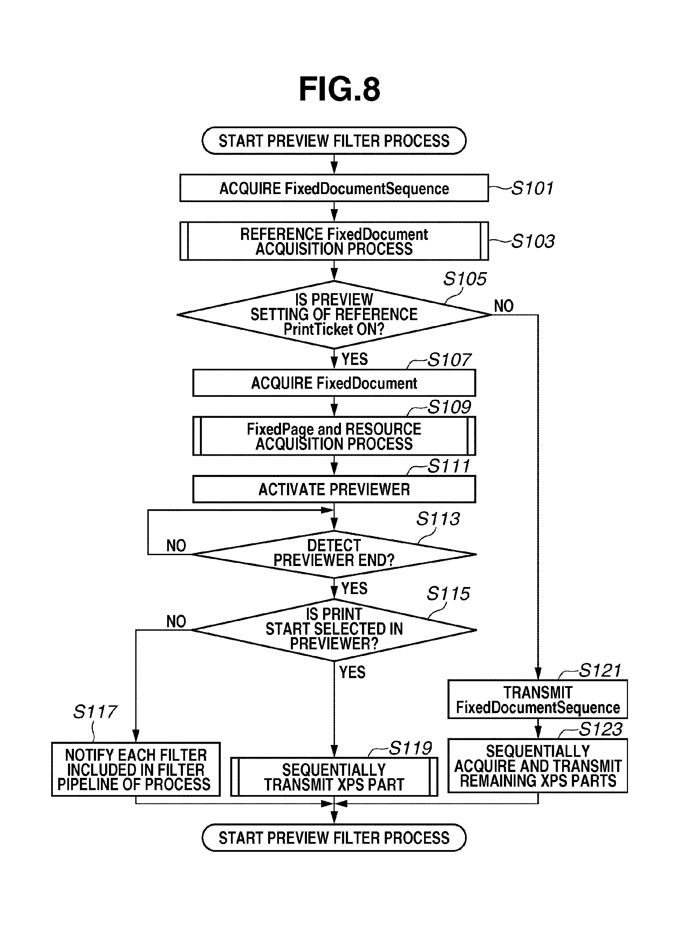

The preview filter process will be described below with reference to Fig. 8. Fig. 8 is an example of a flowchart illustrating the preview filter process. Since the preview filter according to the present example uses the document interface, the XPS data is acquired by each XPS part.

In step S101, the preview filter acquires an FDS. Since the FDS is generated in the previewer when generating a preview XPS document, the FDS is not output as an external file. The FDS thus becomes the data to be transmitted to the subsequent filter after the preview ends, and is stored in the preview filter.

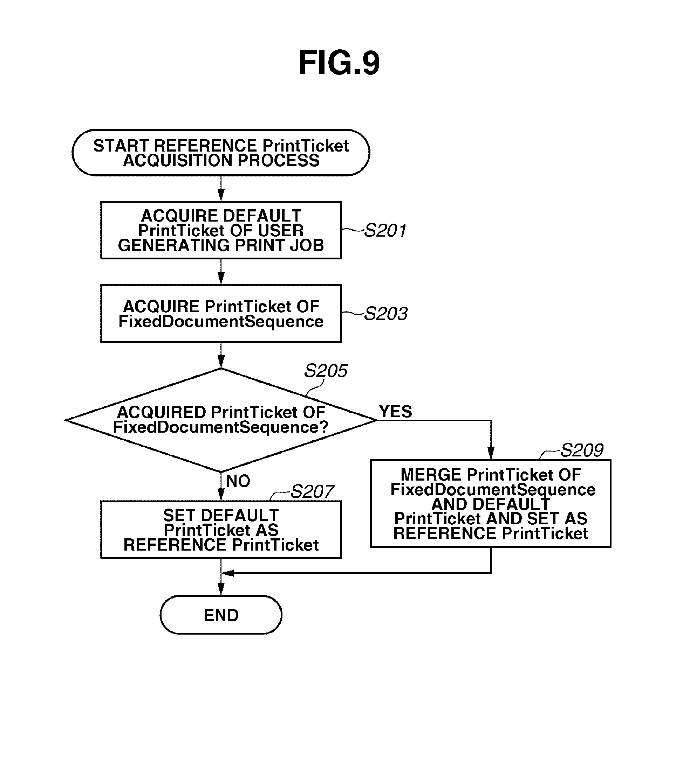

In step S103, the preview filter acquires a reference PT. The reference PT acquisition process will be described below with reference to Fig. 9.

In step S105, the preview filter determines whether a preview setting in reference PT print setting information is on. If the preview setting is on (YES in step S105), the process proceeds to step S107. On the other hand, if the preview setting is off (NO in step S105), the process proceeds to step S121.

The process between step S107 and step S119 is performed when the preview setting is on. In step S107, the preview filter acquires an FD. Similar to the FDS, the FD is not used when generating the preview XPS document, so that the FD is stored in the preview filter and transmitted to the subsequent filter when printing is to be continued after the preview ends.

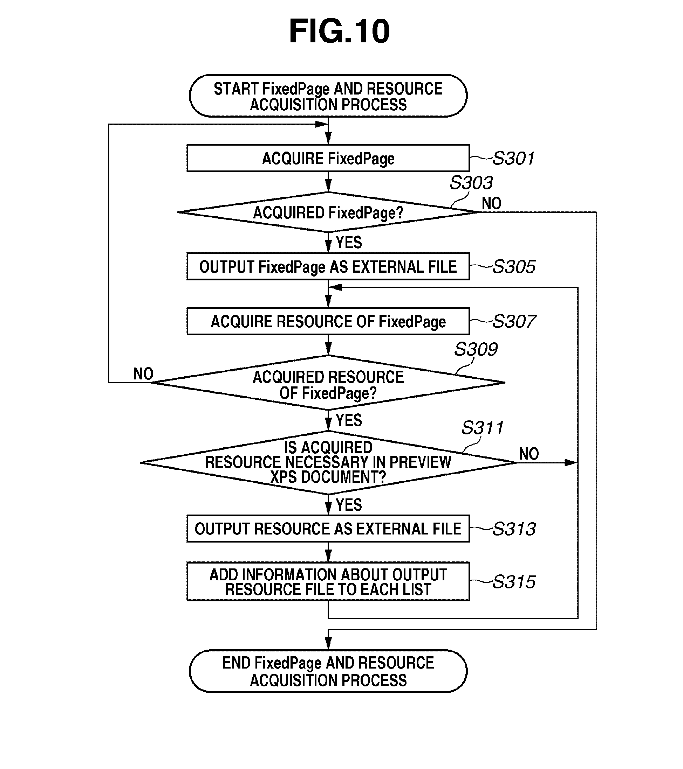

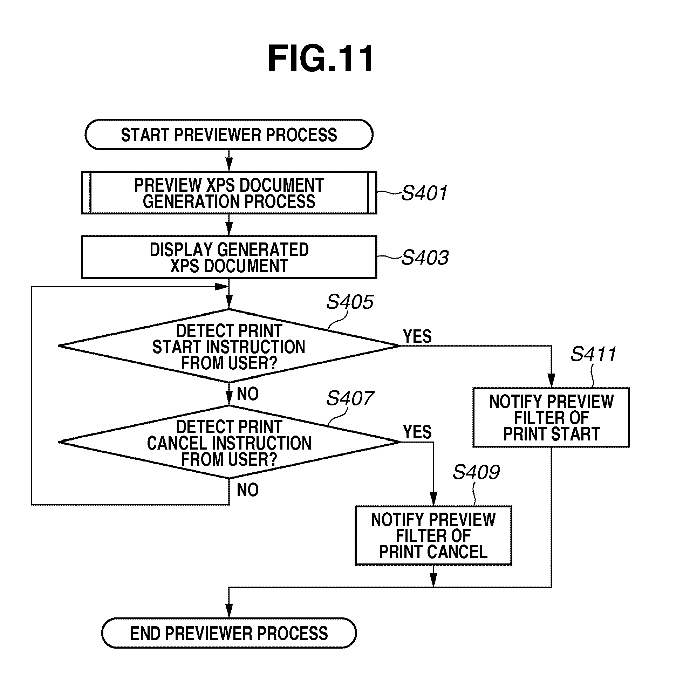

In step S109, the preview filter acquires the FP and the resource associated with the FP used in generating the preview XPS document. The preview filter then stores the FP and the resource as an external file to be transmitted to the previewer. The FP and resource acquisition process will be described below with reference to Fig. 10. Similar to the FD, it is necessary to transmit the FP to the subsequent filter when the preview ends, and the FP is thus stored in the preview filter separate from an external file. When all FPs are acquired, the process proceeds to step S111, and the previewer is activated. The previewer process will be described below with reference to Fig. 11.

In step S113, the preview filter monitors the end of the previewer, and the process proceeds to step S115 when the previewer ends. In step S115, the preview filter determines whether the user instructed print start or print cancel in the previewer. If the user selects print start (YES in step S115), the process proceeds to step S119. On the other hand, if the user selects print cancel (NO in step S115), the process proceeds to step S117.

In step S119, the preview filter transmits the stored XPS part to the subsequent filter, or the print command generation filter in the present exemplary embodiment. In step S117, the preview filter notifies each filter on the filter pipeline of a process end and ends printing.

Step S121 to step S123 describe a process performed when the preview setting is off. In step S121, the preview filter transmits the acquired FDS to the subsequent filter. In step S123, the preview filter sequentially acquires the remaining XPS parts and transmits the XPS parts to the next filter in an order of acquisition. The preview filter ends the filter process when all XPS parts are transmitted.

As described above, it is necessary to merge the PT of the XPS parts to acquire the print setting information in each filter of the filter pipeline. Each part in the XPS document can include a PT but it is also possible to include no PT. Further, the PT in the XPS part may be incomplete, such as the PT only describing N-up information. Therefore, when the PT in the FDS is to be acquired, it is necessary to merge the PT with a PT corresponding to a default print setting made by the user, which stores all setting items handled by the printer driver. As a result, the PT acquired by the merging also includes all print setting items.

Fig. 9 is an example of a flowchart illustrating a process of acquiring the reference PT by merging the PT of the FDS and the PT corresponding to the default print setting by the user.

In step S201, the preview filter acquires a default PT storing the default print setting by the user.

In step S203, the preview filter acquires the PT of the FDS.

In step S205, the preview filter determines whether the PT of the FDS is acquired. If the PT is acquired (YES in step S205), the process proceeds to step S209. If the PT is not acquired (NO in step S205), the process proceeds to step S207.

In step S209, the preview filter sets the PT in which the acquired PT of the FDS and the default PT are merged as the reference PT. The process then ends.

In step S207, since there is no PT in the FDS, the preview filter sets the default PT as the reference PT. The process then ends.

In the present exemplary embodiment, "all print setting items" indicate all setting items that can be specified by the application, at minimum, but does not include setting items inside the printer driver such as a previewed flag.

As described above, the reference PT including all setting items that can be handled by the printer driver can be acquired.

When the preview XPS data is to be generated from XPS parts, it is necessary to transmit the required XPS parts to the previewer which is to generate the preview XPS data. One of such methods is to temporarily store the necessary XPS parts as an external file. Fig. 10 is an example of flowchart illustrating a process performed by the preview filter in acquiring and storing FP and resources such as images and fonts.

In step S301, the preview filter acquires an FP. If the FP is acquired (YES in step S303), the process proceeds to step S305.

In step S305, the preview filter stores the acquired FP as an external file, and the process proceeds to step S307. In step S307, the preview filter acquires the resource used in the FP acquired in step S301.

If a resource is not used in the FP (NO in step S309), the process returns to step S301, and the preview filter acquires an FP again. On the other hand, if a resource is used in the FP (YES in step S309), the process proceeds to step S311.

In step S311, the preview filter determines the type of the acquired resource. If the preview filter determines that the acquired resource is necessary for generating the preview XPS document (YES in step S311), the process proceeds to step S313. If the preview filter determines that the acquired resource is not directly related to the display result (NO in step S311), the process returns to step S305 to acquire a different resource.

In the present exemplary embodiment, resources stored as an external file include images, fonts, color profiles, and a resource dictionary. However, since the type of resource which becomes necessary changes according to the function realized by the previewer, the resources are not limited to the above resources.

In step S313, the preview filter stores the acquired resources as an external file. In step S315, the preview filter generates a list file which describes the relation between the FP and the resources and describes information about the resources in the list, to transfer resource information to the previewer. Other information described in the list file is types of images (e.g., Joint Photographic Experts Group (JPEG), Portable Network Graphics (PNG), and Tagged Image File Format (TIFF)), and types of fonts. Further, the list file is an example of a method of transmitting information to the previewer. However, the method is not limited to the list file, and there are other methods such as setting a name of the external file according to a certain rule.

When all resources related to one FP are acquired, the next FP is acquired, and resources associated with the FP are acquired. The process is continued until all FP stored in the XPS data are acquired.

As described above, the preview filter displays a preview by calling up the previewer which displays the preview XPS document. Fig. 11 illustrates an example of an operation performed by the previewer.

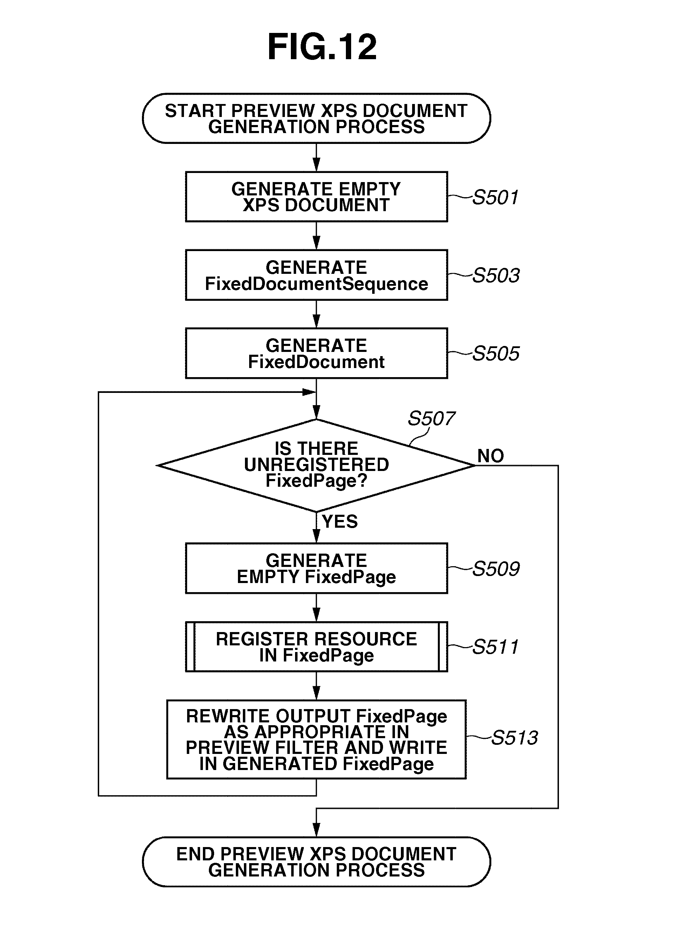

In step S401, the previewer generates a preview XPS document. The preview XPS document generation process will be described below with reference to Fig. 12. When the previewer succeeds in generating the preview XPS document, the process proceeds to step S403.

In step S403, the previewer displays the generated preview XPS document. As a result, the user can confirm an image of a print result according to print settings specified by the user.

Step S405 and step S407 describe a process of monitoring a user instruction to continue or cancel printing. In step S405, the previewer determines whether the user instructed print start by pressing a print start button on the previewer. If the previewer detects that the user instructed print start (YES in step S405), the process proceeds to step S411, and the previewer notifies the preview filter of print continuance. The process performed by the previewer then ends.

On the other hand, if the previewer does not detect that the user instructed print start (NO in step S405), the process proceeds to step S407. In step S407, the previewer determines whether the user instructed print cancel by pressing a print cancel button on the previewer. If the previewer detects that the user instructed print cancel (YES in step S407), the process proceeds to step S409, and the previewer notifies the preview filter of print cancel. The process performed by the previewer then ends.

The preview screen is displayed, until when the user instructs print start, or until when the user instructs print cancel. The user may change the print settings while the preview screen is displayed. Since the data stored in the preview filter are used as the XPS parts that the preview filter transmits to the subsequent filter, the preview XPS document is deleted without being used as print data.

Further, in the present exemplary embodiment, the previewer generates the preview XPS document. However, the preview filter can also generate the preview XPS document.

Fig. 12 is a flowchart illustrating an example of the preview XPS document generation process.

In step S501, the previewer generates an empty XPS document, and the process proceeds to step S503. In step S503, the previewer generates an FDS in the XPS document generated in step S501. In step S505, the previewer adds FD to the FDS generated in step S503.

In the present exemplary embodiment, the FDS and the FD are not stored in the preview filter. Therefore, the FDS and the FD are required to be generated in the previewer. However, the FDS and the FD can be stored in the preview filter similar to the other XPS parts and be added to the XPS document. Further, according to the present exemplary embodiment, if there is a plurality of FD in the XPS document, i.e., the print data, only one FD is generated in the preview XPS document, and one or more FP that exist all become subordinate to one FD. As a result, the preview XPS document of a minimum configuration is generated to the extent that display of a print preview by which the user confirms the print result, is not affected. However, the configuration of the preview XPS document changes as necessary, according to the function of the previewer to be realized. For example, if a display form in which the FD affects the display content is used, the FD is configured similar to the original data.

Step S507 to step S513 describe an FP addition process. In step S507, the previewer determines whether there is an FP among the FP stored as an external file by the preview filter which is not added to the preview XPS document. If the FP is not added to the preview XPS document (YES in step S507), the process proceeds to step S509. On the other hand, if all FP are registered (NO in step S507), the preview XPS document generation process ends. Since there is one or more FP in the XPS document, the process proceeds to step S509 as a result of an initial determination. In step S509, the previewer generates an empty FP.

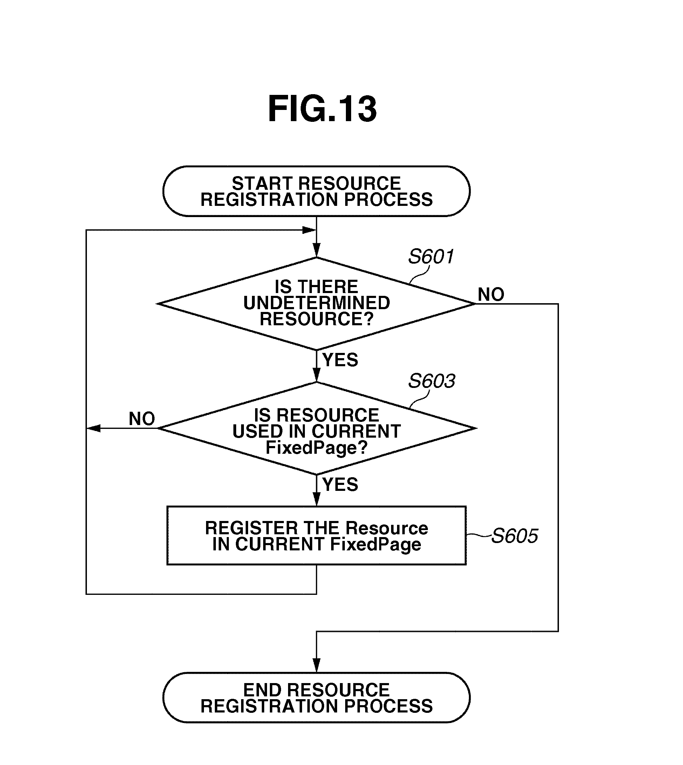

A process of registering resources to the FP generated in step S509 and describing the content in the FP are performed in step S511 and step S513. In step S511, the previewer registers the resources in the generated XPS document. The process of registering the resources in the FP will be described below with reference to the flowchart illustrated in Fig. 13.

Referring to Fig. 13, in step S601, the previewer determines whether there is a resource not yet determined whether to be registered in the current FP. If there is an undetermined resource (YES in step S601), the process proceeds to step S603. If there is no undetermined resource (NO in step S601), the resource registration process ends.

In step S603, the previewer determines whether the unregistered resource is used in the FP currently being processed. If the resource is used in the FP (YES in step S603), the process proceeds to step S605. If the resource is not used in the FP (NO in step S603), the process returns to step S601. The determination can be performed by referring to a resource information list generated in step S311 of the flowchart illustrated in Fig. 10. However, the determination is not limited to the above method.

In step S605, the previewer registers the corresponding resource in the FP currently being processed. After the resource is registered, the process returns to step S601, and the process is repeated until all resources are registered. The process of registering resources to the FP currently being processed then ends.

After the resource registration is completed, the process returns to step S513 in the flowchart illustrated in Fig. 12, in which the content of the FP is described. The content is described according to the content of the FP stored as an external file in the preview filter. Portions that are required to be rewritten to generate a preview XPS document, such as a resource file path or a display area, are corrected as appropriate before registration.

When registration of one FP is completed, the process returns to step S507. In step S507, the previewer determines whether there is an unregistered FP and repeats the process from step S507 to step S513 until all FP are registered. When the previewer determines that all FP are registered (NO in step S507), the preview XPS document generation process ends, and the previewer displays the generated XPS document in step S403 illustrated in the Flowchart of Fig. 11.

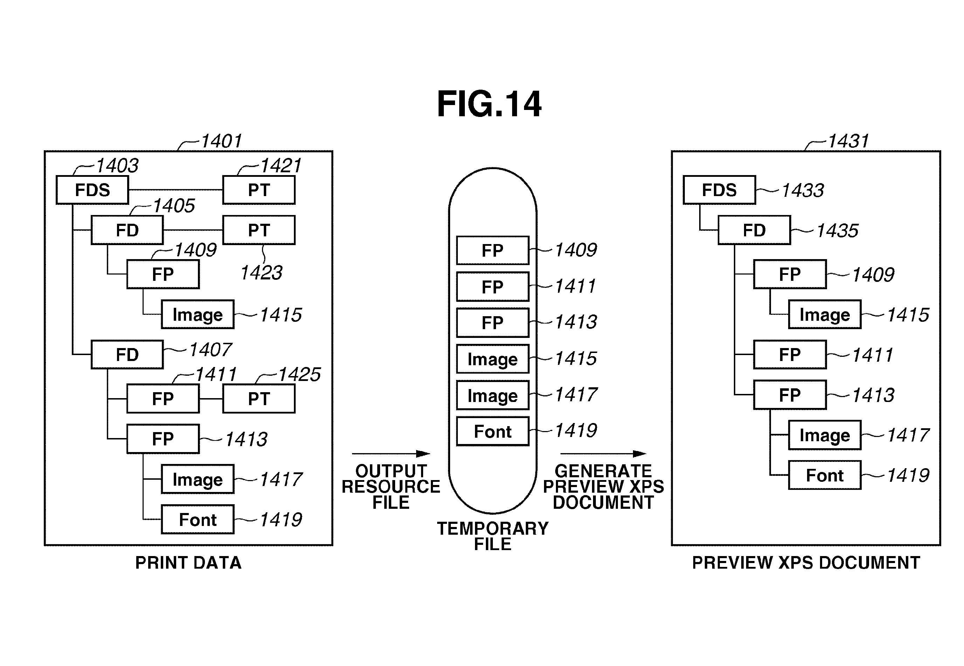

Fig. 14 illustrates an example of the preview XPS document generated from print data.

Referring to Fig. 14, print data 1401 is an XPS document. In the print data 1401, there are two FD 1405 and 1407 under one FDS 1403. The FD 1405 includes FP 1409, and the FD 1407 includes FP 1411 and 1413. The FP 1409 uses Image 1415 as a resource, and the FP 1413 uses Image 1417 and Font 1419 as resources. Further, PT 1421, PT 1423, and PT 1425 in which print settings are described are added to the FDS 1403, FD 1405, and FP 1411 respectively.

The preview filter outputs from the above-described XPS parts, the parts that are necessary in generating the preview XPS document. In the example illustrated in Fig. 14, the preview filter outputs FP in which display contents of each page are described, and resources used by the FP (except for resources that do not affect the display such as thumbnails). More specifically, the preview filter outputs FP 1409, FP 1411, and FP 1413, and Image 1415,Image 1417 and Font 1419 which are resources, as external files.

The previewer then generates a preview XPS document 1431 using the output XPS parts. The previewer generates FDS 1433 and then FD 1435 associated with the FDS 1433. Further, the previewer adds FP 1409, FP 1411, and FP 1413 below the FD 1435, and appropriately locates resources used by each FP. Each FP can be registered after the contents are rewritten according to conditions such as print settings. As a result, the previewer generates the preview XPS document 1431.

According to the present exemplary embodiment, the preview XPS document includes one FD. However, FD can be allocated similar to the original data according to a display format or objective, for example, in a case of displaying the preview in units of FD. Further, a preview XPS document without PT and thumbnails is generated in the present exemplary embodiment. However, since necessary XPS parts change according to the display format of the previewer, the form of the preview XPS document is not limited to the above embodiment.

In the first exemplary embodiment, the filter configuration in the printer driver cannot be changed. In the current OS, the filter configuration is actually determined by an XML file referred to as a .config file, and the filter configuration cannot be changed unless the .config file is corrected. Since the filter pipeline calls up the filter by referring to the .config file, the filter configuration cannot be changed in the printer driver after printing starts. Therefore, whether to include the preview filter cannot be determined by switching on or off the preview setting.

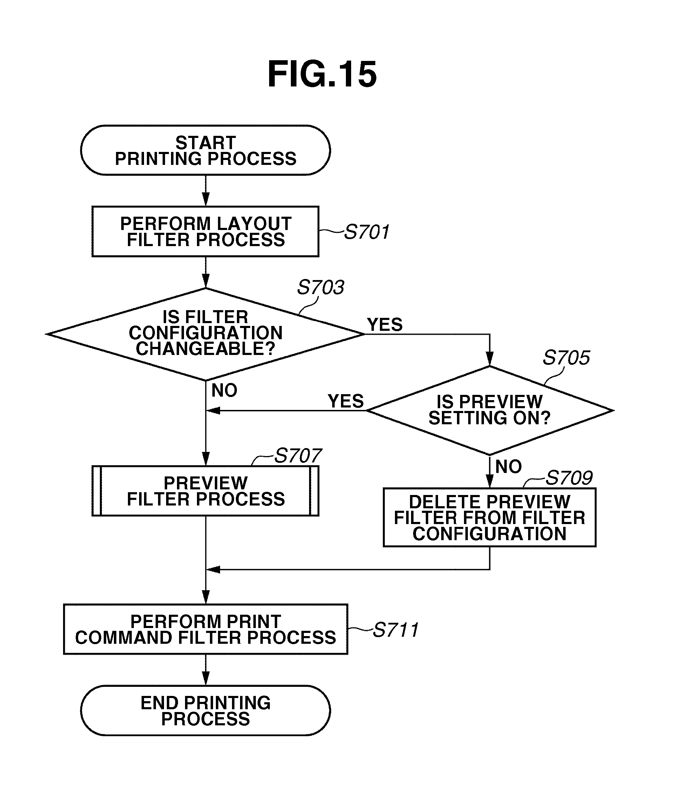

However, if there is a print system in which the filter configuration can be changed according to the print settings, the system according to a second exemplary embodiment can be realized. Fig. 15 illustrates an example of a process performed by a print control apparatus which changes the filter configuration according to the print settings.

A printing process is started, and in step S701, the layout filter performs a layout process. At the same time, in step S703, the layout filter determines whether the current printing system can change the filter configuration. The determination is based on, for example, version information of the OS or a module used in the printing system. If the printing system can change the filter configuration (YES in step S703), the process proceeds to step S705. On the other hand, if the printing system cannot change the filter configuration (NO in step S703), the process proceeds to step S707.

In step S705, the layout filter determines whether the preview setting is on or off. If the preview setting is on (YES in step S705), the process proceeds to step S707. IF the preview setting is off (NO in step S705), the process proceeds to step S709.

The preview filter performs the process in step S707. In the present exemplary embodiment, the preview filter which performs the process in step S707 is the preview filter described in the first exemplary embodiment. However, the filter is not limited to the filter using a document interface as described in the first exemplary embodiment, and can use a filter using a stream interface.

In step S709, the preview filter is deleted from the filter configuration. As a result, data passes through the preview filter only when a preview is to be displayed, and the data is directly transmitted from the layout filter to the print command filter when a preview is not to be displayed.

In step S711, the print command filter converts the print data to a print command that can be interpreted by the printer and transmits the print command to the printer. The printer driver process then ends.

In the above-described process, the preview filter process can only be performed when the preview setting is on in a printing system in which the filter configuration can be changed.

In displaying a print preview, the previewer can include a function for changing the print setting. A third exemplary embodiment describes a method in which the preview function of the first exemplary embodiment reflects in the print result a print setting that is changed in a preview screen.

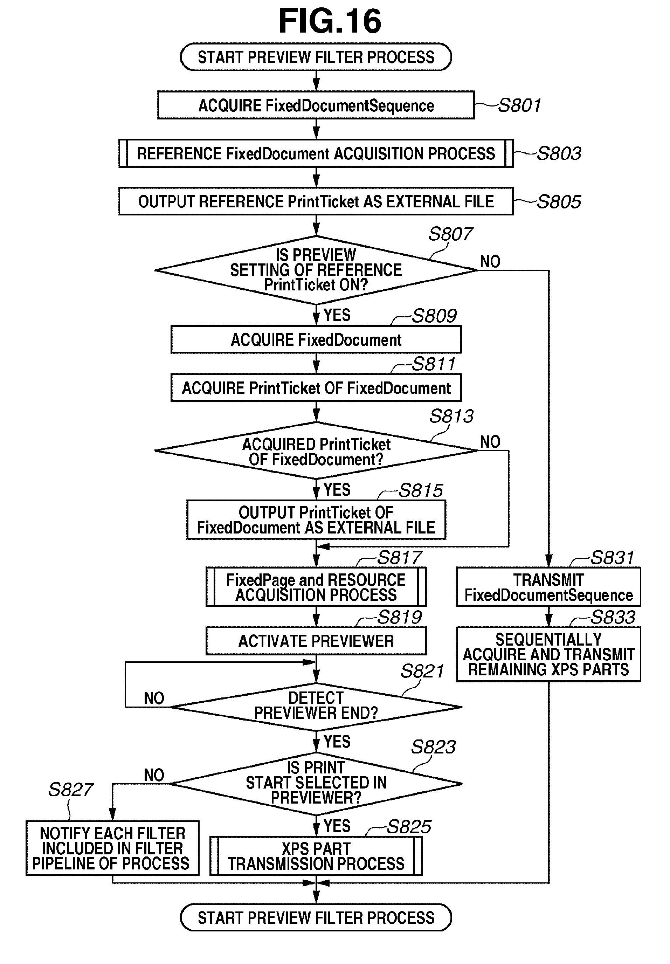

The process performed by the preview filter in the third exemplary embodiment will be described below with reference to Fig. 16. The basic operations are similar to the operations of the preview filter described in the first exemplary embodiment. However, a process of storing PT, in which the print settings are described, as an external file, is added.

In step S801, the preview filter acquires an FDS, and in step S803, the preview filter acquires a reference PT. In step S805, the preview filter stores the acquired reference PT as an external file. Similarly, in step S809, the preview filter acquires an FD, and in step S811, the preview filter acquires a PT of the FD.

In step S813, since there may not be a PT added to the FD, the preview filter determines whether the PT is acquired. If the PT is acquired (YES in step S813), the process proceeds to step S815, and the preview filter stores the PT of the FD as an external file. On the contrary, if the PT is not acquired (NO in step S813), the process proceeds to step S817, and the preview filter acquires an FP.

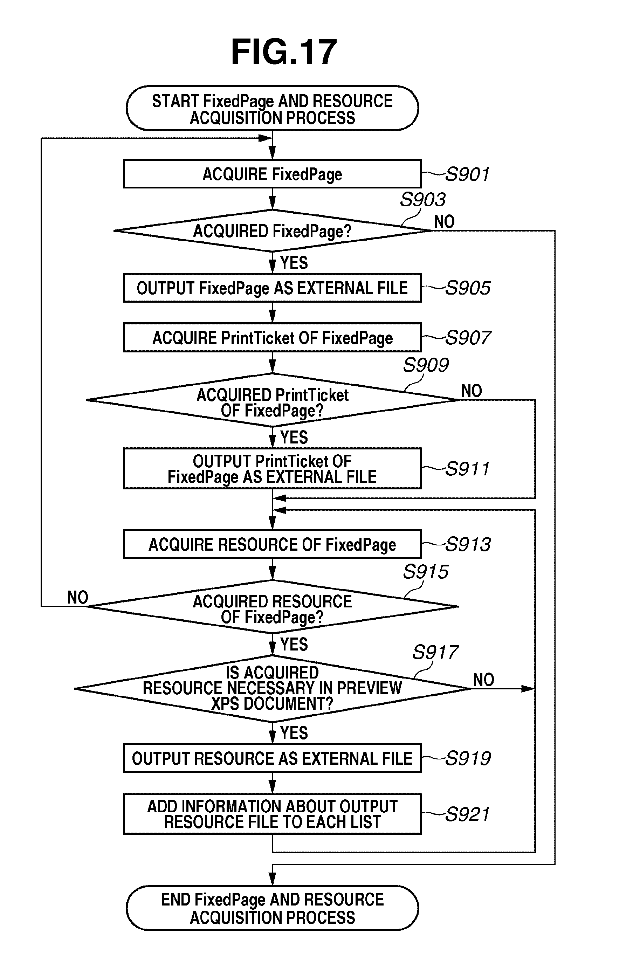

A process of acquiring FP and resources will be described below with reference to Fig. 17. The basic operation is the same as the process of acquiring FP and resources in the first exemplary embodiment. However, the process of acquiring a PT of the FP is added from step S907 to step S911. In step S907, the preview filter acquires the PT of the FP. In step S909, the preview filter determines whether the PT is acquired. If the PT is acquired (YES in step S909), the process proceeds to step S911, and the preview filter stores the PT of the FT as an external file. As a result, the PT of the FT and the resource are stored as the external file.

After the preview filter acquires all FP and resources, the process proceeds to step S819 illustrated in Fig. 16, and the preview filter activates the previewer.

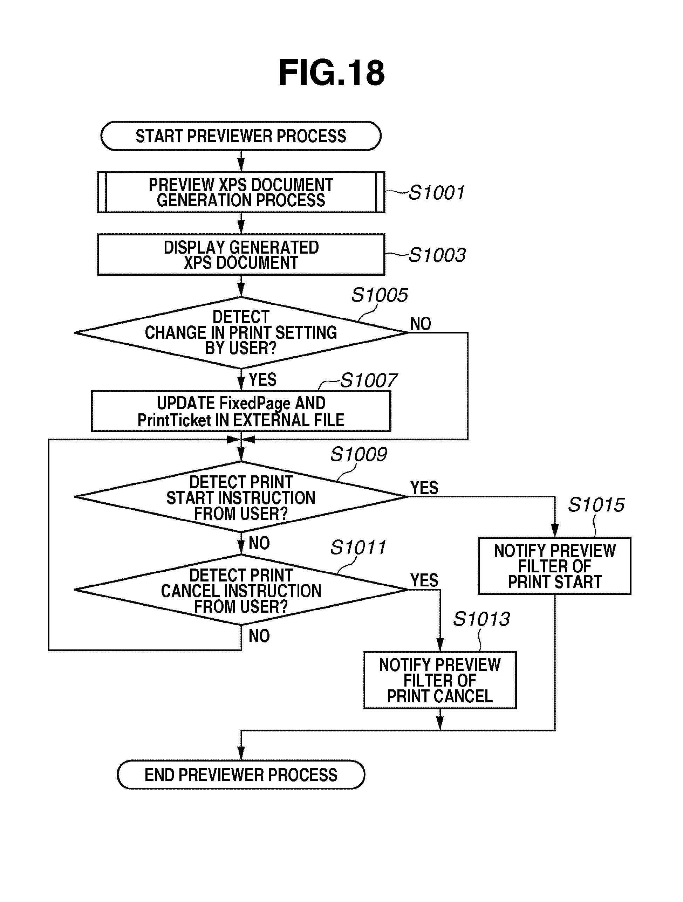

The process performed by the previewer in the third exemplary embodiment will be described below with reference to Fig. 18.

In step S1001, the previewer generates a preview XPS document similarly as in the first exemplary embodiment. In step S1003, the previewer displays the generated XPS document. The user can change the print settings in the previewer after confirming the display. The user can change print settings such as paper type, paper feed orientation, and layout. When the print setting is changed, either or both the FP and the PT needs to be changed.

Therefore, in step S1005, the previewer determines whether the user changed the print setting. If the user has changed the print setting (YES in step S1005), the process proceeds to step S1007, and the previewer updates the FP and PT according to the new print setting.

If the PT is not included in the original data and not stored as an external file, the previewer generates a PT of the FD and reflects the changes in the print setting corresponding to the generated PT. Further, if a setting which affects the display content is changed, the previewer reconstructs the preview XPS document using the updated external file and displays the reconstructed preview XPS document. The user can then change the print setting by confirming the change in the print result. Further, since the user may want to restore the setting to the original setting after confirming the changed result, the original data and the data generated when changing the settings are stored separately from the updated external file. As a result, there is no need to perform a conversion process again. Further, the display can be easily updated when the setting is restored to the original setting by storing the preview document generated in each level.

After the user selects the desired print setting, the user instructs print start or print cancel. If the user instructs print start (YES in step S1009), the process proceeds to step S1015, and the previewer notifies the preview filter of print start. Similarly, if the user instructs print cancel (YES in step S1011), the process proceeds to step S1013, and the previewer notifies the preview filter of print cancel. Since the process performed when the user instructs print cancel is similar to the process performed in the first exemplary embodiment, the process performed when the user instructs print start will be described below.

Returning to Fig. 16, after the preview filter detects the previewer end (YES in step S821), the preview filter performs a process according to a notification from the previewer. In step S823, if the previewer notifies the preview filter of print start (YES in step S823), the process proceeds to step S825, and the preview filter transmits to the subsequent filter the external file updated by the previewer as an XPS part.

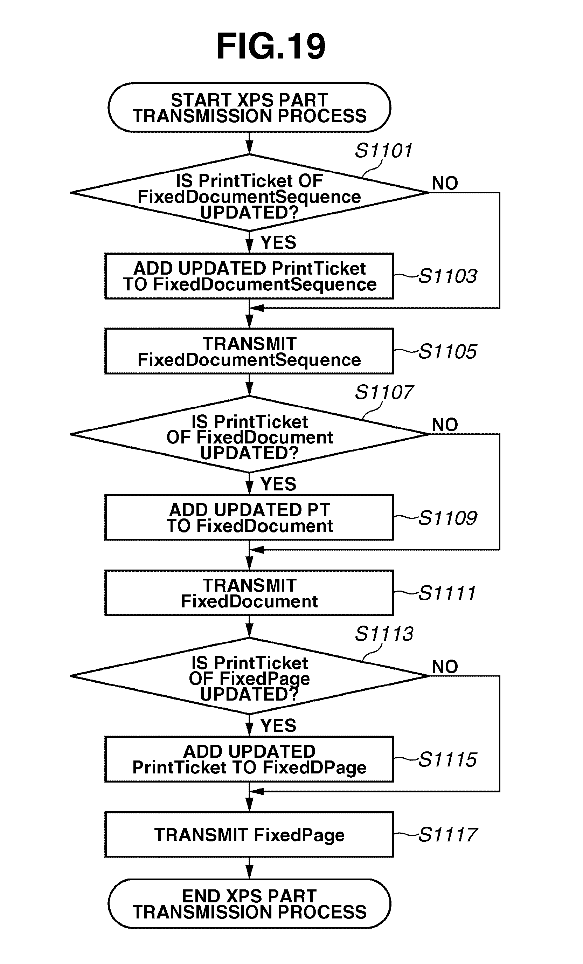

The XPS parts transmission process will be described with reference to Fig. 19.

In step S1101, the preview filter determines whether the reference PT is updated by the previewer. If the reference PT is updated (YES in step S1101), the process proceeds to step S1103. If the reference PT is not updated (NO in step S1101), the process proceeds to step S1105. In step S1103, the preview filter registers the updated reference PT as PT of the FDS, and the process proceeds to step S1105. In step S1105, the preview filter transmits the FDS stored when acquiring the FDS, to the subsequent filter.

The FD is processed similar to the FDS. In step S1107, the preview filter determines whether the PT of the FD is updated. If the PT is updated (YES in step S1107), the process proceeds to step S1109, and the preview filter adds the updated PT to the FD. In step S1111, the preview filter transmits the FD stored when the FD was acquired, to the subsequent filter.

In a case where the FP is to be transmitted, the data stored as the external file is used instead of the data stored in the preview filter, so that the content of the FP updated by the previewer can be reflected in the print result.

In step S1113, the preview filter determines whether the PT of the FP is updated, similar to the FD. IF the PT is updated (YES in step S1113), the process proceeds to step S1115. In step S1115, the preview filter registers the updated PT of the FP. In step S1117, the preview filter reads out the FP stored as the external file and transmits the FP to the subsequent filter. When all XPS parts are transmitted, the process performed by the preview filter ends. In the present exemplary embodiment, only one transmission of the FD and the FP are described. However, since a plurality of FD and FP can exist in the XPS data, the transmission of the FD from step S1107 to step S1111 and the transmission of FP from step S1113 to step S1117 are performed a number of times equal to the number of existing FD and FP respectively.

Further, in the present exemplary embodiment, all PT are stored as external files. Since the PT whose content is required to be reflected depends on the type of print setting that can be changed in the previewer, only the PT which is necessary can be extracted according to the function of the previewer. Further, the PT can be updated and registered by the preview filter without storing all PT as external files while the previewer notifies the preview filter of the changes only.

By performing the above-described process, printing can be performed by reflecting the print settings that the user specified, in the previewer. In the present exemplary embodiment, the previewer is used to edit the XPS data. However, an application which edits an XPS document that does not include a display function can be used to edit the XPS data. In such a case, the editing result by the editing application can be reflected in the print result similarly as in the present exemplary embodiment.

In the above-described first, second, and third exemplary embodiments, the preview filter and the previewer are separate modules. However, the preview filter and the previewer do not need to be separate modules, and the preview filter can generate a preview XPS document in addition to receiving and sending data between filters. In such a case, it is not necessary to transfer the FP and the resources to the previewer.

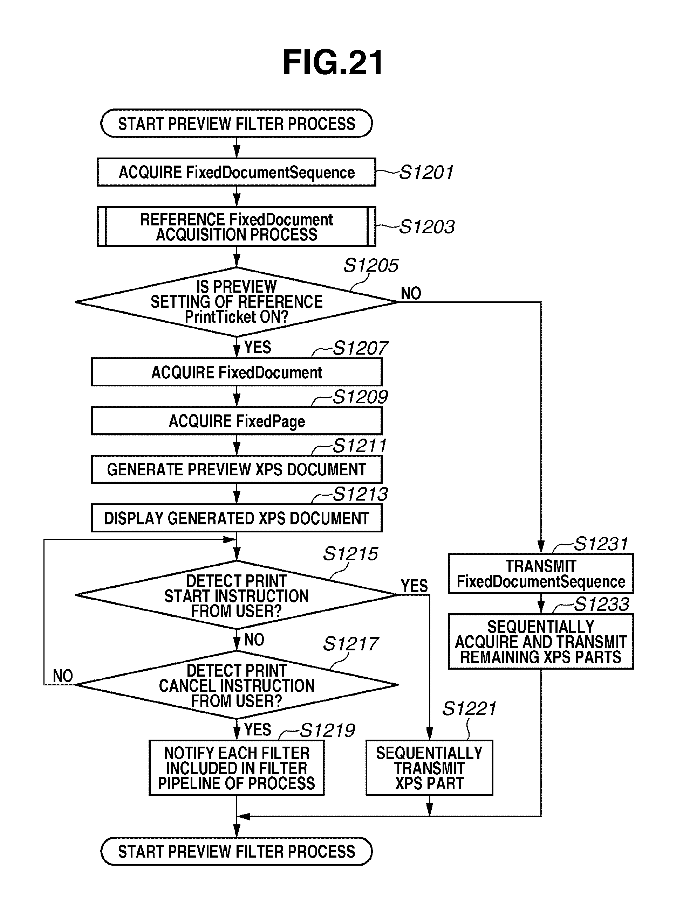

A process performed by the preview filter when the preview filter performs all the processes related to the preview function will be described below with reference to Fig. 21.

In step S1201, the preview filter acquires the FDS from the previous filter. In step S1203, the preview filter acquires the reference PT from the acquired FDS. In step S1205, the preview filter determines the preview setting from the acquired reference PT. If the preview setting is on (YES in step S1205), the process proceeds to step S1207. If the preview setting is off (NO in step S1205), the process proceeds to step S1231.

Step S1207 to step S1221 describe a process performed when the preview setting is on. In step S1207, the preview filter acquires a FD, and in step S1209, the preview filter acquires a FP. In step S1211, the preview filter generates a preview XPS document using the XPS parts acquired in step S1201 to step S1211. The preview filter may use the above-described preview XPS document generation process used by the previewer to generate the preview XPS document.

In step S1213, the preview filter displays the preview XPS document generated in step S1211. The user confirms the displayed content and instructs print start or print cancel. In step S1215 and step S1217, the preview filter monitors the user instruction. If the user instructs print start (YES in step S1215), the process proceeds to step S1221, and if the user instructs print cancel (YES in step S1217), the process proceeds to step S1219. In step S1221, the preview filter sequentially transmits the acquired XPS parts to the subsequent filter and ends the process. In step S1219, the preview filter transmits a process end notification to each filter and ends the printer driver process.

Step S1231 and step S1233 describe a process performed when the preview setting is off. In step S1233, the preview filter sequentially acquires and transmits the remaining XPS parts and ends the process when all XPS parts are transmitted.

According to the present exemplary embodiment, the proposed preview function can be realized without using the previewer. Further, instead of the preview filter performing all of the processes related to previewing as described above, the preview filter can perform the processes up to generating the preview XPS document, and the previewer can display the preview XPS document. In such a case, the created preview XPS document is transferred from the preview filter to the previewer. Therefore, the range of the processes performed by each module is not limited.

Further, in the above-described exemplary embodiment, the preview filter is described as an example of a filter that handles stream format data. However, the present invention can be applied to a filter that handles stream format data, other than the preview filter.

As described above, according to the above-described exemplary embodiments, a load generated in data conversion between filters by using a preview filter including the reach format interface can be reduced. Further, lowering of performance when the preview setting is off can be reduced.

According to the exemplary embodiments of the present invention, the load generated in the data conversion process performed between filters is decreased, and performance lowering can be reduced.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. An information processing apparatus (202) comprising:
storage means (317) configured to store document data in a structured mark-up language;
determination means configured to determine whether a specific function setting is on;
conversion means (323) configured to convert, if the determination means determines that the specific function setting is on, the document data acquired by the acquisition means to a stream format; and
transmission means configured to transmit, if the determination means determines that the specific function setting is off, the document data in the structured mark-up language stored by the storage means to a subsequent filter without converting the document data to the stream format.

2. The information processing apparatus (202) according to claim 1, wherein the conversion means (323) converts the document data stored by the storage means (317) to the stream format data excluding parts that do not affect the specific function.

3. The information processing apparatus (202) according to claim 1, further comprising:
changing means configured to change print settings; and
updating means configured to update the document data in the structured mark-up language transmitted to a subsequent filter, based on print settings changed by the changing means.

4. An information processing apparatus (202) comprising:
determination means configured to determine whether a specific function setting is on;
means configured to cause a specific function filter to acquire, if the determination means determines that the specific function setting is on, document data from a previous filter in a structured mark-up language, and to convert the document data to a stream format, and to perform the specific function using the converted stream data; and
disabling means configured to prevent operation of the specific function filter, if the determination means determines that the specific function setting is off.

5. An information processing apparatus (202) according to claim 1, wherein the specific function is a preview function, and the apparatus further comprises preview means (303) configured to display a preview using stream data converted by the conversion means.

6. An information processing method comprising:
storing data in a structured mark-up language;
determining whether a specific function setting is on;
converting, if it is determined that the specific function setting is on, the document data to a stream format; and
transmitting, if it is determined that the specific function setting is off, the document data in the structured mark-up language to a subsequent filter without converting the document data to the stream format.

7. An information processing method comprising:
determining whether a specific function setting is on;
causing a specific function filter to acquire, if it is determined that the specific function setting is on, document data from a previous filter in a structured mark-up language, to convert the document data to a stream format, and to perform the specific function using the converted stream data; and
preventing operation of the specific function filter, if the determination means determines that the specific function setting is off.

8. A program that, when executed on an information processing apparatus, causes the information processing apparatus to perform a method according to claim 6 or claim 7.

9. A storage medium storing a program according to claim 8.
